(19) Europäisches Patentamt
European Patent Office
Office européen des brevets

(11) **EP 4 216 316 A1**

(12) **EUROPEAN PATENT APPLICATION**
published in accordance with Art. 153(4) EPC

(43) Date of publication:
**26.07.2023 Bulletin 2023/30**

(21) Application number: **21943321.6**

(22) Date of filing: **30.11.2021**

(51) International Patent Classification (IPC):
***H01M 4/62*** *(2006.01)* ***H01M 10/0567*** *(2010.01)*

(86) International application number:
**PCT/CN2021/134335**

(87) International publication number:
**WO 2023/097432 (08.06.2023 Gazette 2023/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
- **ZHANG, Ming**
  **Ningde, Fujian 352100 (CN)**
- **ZHANG, Tongxian**
  **Ningde, Fujian 352100 (CN)**
- **WU, Qifan**
  **Ningde, Fujian 352100 (CN)**

(74) Representative: **Thoma, Michael**
**Lorenz Seidler Gossel**
**Rechtsanwälte Patentanwälte**
**Partnerschaft mbB**
**Widenmayerstraße 23**
**80538 München (DE)**

# (54) POSITIVE ELECTRODE SLURRY, AND SECONDARY BATTERY PREPARED THEREFROM

(57) The present application relates to a positive electrode slurry and a secondary battery prepared therefrom, the positive electrode slurry comprising a lithium-containing phosphate material, a first positive electrode additive, a second positive electrode additive and a binder, wherein the first positive electrode additive is at least one of a compound represented by structural formula 1 and a compound represented by structural formula 2 below, wherein Riis one selected from C2-C4 alkylene, alkenylene and derivatives thereof substituted or unsubstituted by halogen; $R_2$ and $R_3$ are each independently alkyl, alkenyl, alkynyl, or aryl substituted or unsubstituted by halogen; the binder includes a polymer comprising a repeating unit represented by structural formula 3 below, wherein the pH of the second positive electrode additive is greater than or equal to 10.0.

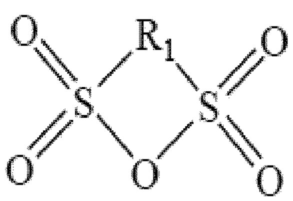

Structural formula 1

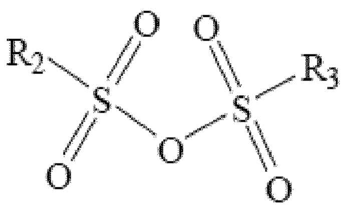

Structural formula 2

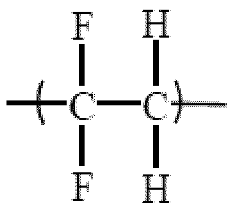

Structural formula 3.

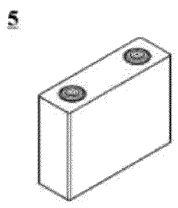


FIG. 1

EP 4 216 316 A1

# Description

## Technical Field

The present application relates to the field of battery technology, and in particular, to a positive electrode slurry and a secondary battery prepared therefrom.

## Background Art

In recent years, with the increasing demand for clean energy, secondary batteries are widely used in energy storage power systems such as water power, thermal power, wind power and solar power stations, as well as electric power tools, vehicles, military equipment, aerospace and other fields. As the fields of application of secondary batteries are greatly widened, higher requirements are raised for their performances.

At present, the commercial positive electrode active materials are mainly lithium-containing phosphate materials (such as $LiFePO_4$) and ternary (nickel, cobalt and manganese) positive electrode active materials. Lithium-containing phosphate materials (such as $LiFePO_4$), when used in conjunction with graphite, have a problem of rapid degradation in the early cycle of the battery. In order to solve this problem, adding a lithium supplement to the positive electrode is an effective method. The use of lithium supplements significantly alleviates the problem of rapid degradation in the early cycle of the battery.

## Summary of the Invention

Technical problem

However, since most of the lithium supplements are lithium-rich materials with strong alkalinity (for example, with a pH of greater than or equal to 10.0), even when a polymer containing a vinylidene fluoride repeating unit (as shown in structural formula 3 below) is used as the binder for the positive electrode slurry, the molecular chain of the polymer used as the binder is prone to removal of HF molecule in a strongly alkaline environment in the process of stirring the positive electrode slurry, and continuous double bonds are formed on the molecular chain. The double bond may be broken and cross-linked with other molecular chains, which eventually leads to chemical gelation of the positive electrode slurry, thereby affecting normal dispensing, coating and subsequent processes. In addition, the above-mentioned lithium-rich materials generally have a strong catalytic oxidation effect, thereby aggravating the oxidative decomposition of the electrolyte solution in the battery, resulting in increased gas evolution.

Technical solutions

The present application is accomplished by the present inventors to solve the above-mentioned problems.

According to a first aspect of the present application, provided is a positive electrode slurry comprising a lithium-containing phosphate material, a first positive electrode additive, a second positive electrode additive and a binder, wherein,

the first positive electrode additive is at least one of a compound represented by structural formula 1 and a compound represented by structural formula 2 below:

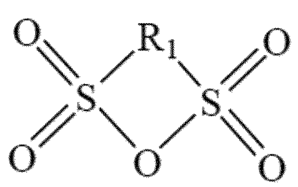

Structural formula 1

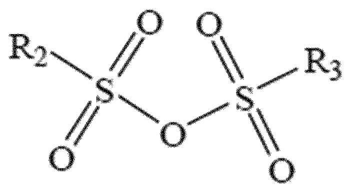

Structural formula 2

wherein $R_1$ is selected from one of C2-C4 alkylene, alkenylene and derivatives thereof substituted or unsubstituted by halogen; $R_2$ and $R_3$ are each independently alkyl, alkenyl, alkynyl or aryl substituted or unsubstituted by halogen; the binder includes a polymer having a repeating unit represented by structural formula 3 below,

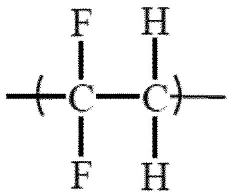

Structural formula 3

wherein the pH of the second positive electrode additive is greater than or equal to 10.0.

The positive electrode slurry provided according to the present application, although comprising a polymer having a repeating unit represented by the above-mentioned structural formula 3 as a binder (while other types of binders may be contained) and comprising a second positive electrode additive with a pH of greater than or equal to 10.0, still has good fluidity in the standing time of at least 24 h after preparation, so it meets the technical requirements of the actual manufacturing process of the secondary battery.

According to any aspect of the present application, the mass ratio of the first positive electrode additive to the second positive electrode additive may be 0.01: 100 - 100:100.

In the present application, when the mass ratio of the first positive electrode additive to the second positive electrode additive is within the above range, the effect of prolonging the standing stabilization time of the positive electrode slurry may be significant. On the other hand, when the mass ratio of the first positive electrode additive to the second positive electrode additive is within the above range, even if the second positive electrode additive is a lithium supplement, the first positive electrode additive will hardly consume the active lithium ions of the lithium supplement, thereby maintaining the capacity of the battery.

According to any aspect of the present application, the $R_1$ may be ethylene, propylene, butylene, vinylene or propenylene substituted or unsubstituted by halogen.

According to any aspect of the present application, the $R_2$ and $R_3$ may each independently be methyl, ethyl, propyl or butyl substituted or unsubstituted by halogen.

When $R_1$ or $R_2$ and $R_3$ are the above-mentioned groups, on the one hand, it can be ensured that the first positive electrode additive itself will not cause the physical gelation of the slurry; on the other hand, after the first positive electrode additive reacts on the surface of the second positive electrode additive, it can partially isolate the electrolyte solution on the surface of the second positive electrode additive.

According to any aspect of the present application, the first positive electrode additive may be at least one selected from the group consisting of:

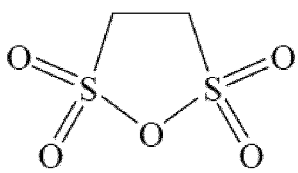

Compound 1

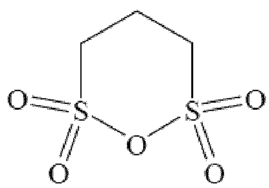

Compound 2

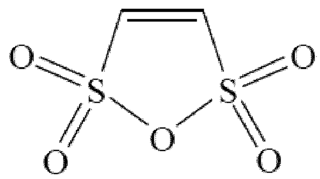

Compound 3

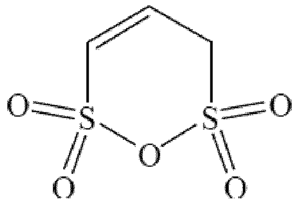

Compound 4

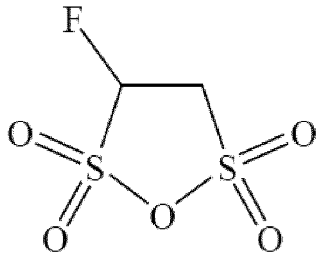

Compound 5

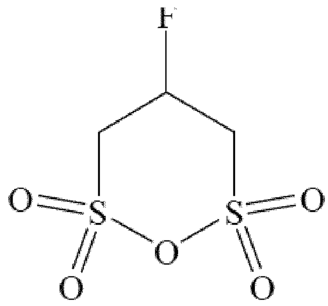

Compound 6

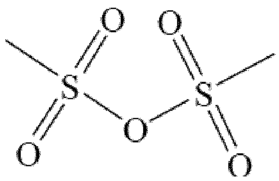

Compound 7

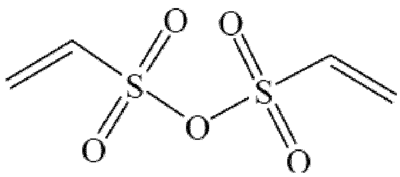

Compound 8

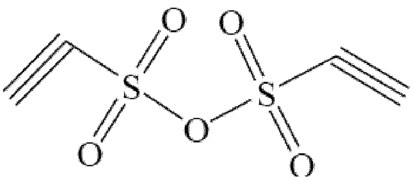

Compound 9

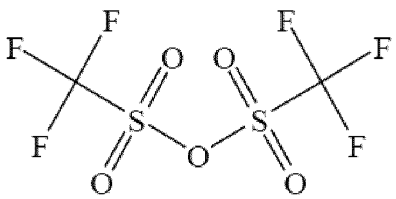

Compound 10

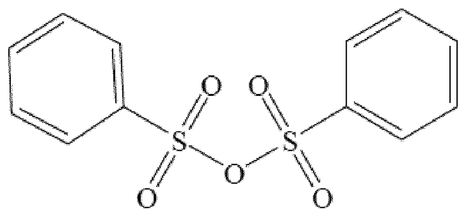

Compound 11 .

According to any aspect of the present application, the binder may comprise at least one selected from the group consisting of: vinylidene fluoride homopolymer, vinylidene fluoride-acrylic acid copolymer (P(VDF-co-AA)), vinylidene fluoride-acrylate copolymer, vinylidene fluoride-tetrafluoroethylene copolymer, vinylidene fluoride-pentafluoropropylene copolymer, vinylidene fluoride-pentafluoropropylene-tetrafluoroethylene copolymer, vinylidene fluoride-perfluoromethyl vinyl ether-tetrafluoroethylene copolymer, and vinylidene fluoride-chlorotrifluoroethylene copolymer; optionally, the binder may be vinylidene fluoride-acrylic acid copolymer or vinylidene fluoride homopolymer.

According to any aspect of the present application, the pH of the lithium-containing phosphate material may be less than 10.0. When the pH of the lithium-containing phosphate material is greater than or equal to 10.0, chemical gelation of the positive electrode slurry is likely to occur during the standing and processing processes after preparation.

According to any aspect of the present application, the lithium-containing phosphate material may comprise at least one selected from the group consisting of $LiFePO_4$, $LiFeVPO_4$, $LiFeMnPO_4$, carbon-coated $LiFePO_4$, carbon-coated $LiFeVPO_4$, and carbon-coated $LiFeMnPO_4$. When the above-described lithium-containing phosphate material is used as the active material, the life characteristics and capacity characteristics of the battery can be improved.

According to any aspect of the present application, the second positive electrode additive may comprise at least one selected from the group consisting of: $Li_2MnO_3$, $Li_2MoO_3$, $Li_2RuO_3$, $Li_3VO_4$, $Li_2NiO_2$, $Li_6CoO_4$, $Li_5FeO_4$, $Li_2C_2$, $Li_3N$, $Li_2S$ and materials represented by the general formula $Li_{1+a}[Ni_xCo_yMn_zM_b]O_2$,

wherein $0.6<x<1$, $0\leq y<0.3$, $0\leq z<0.3$, $0<a<0.2$, $0<b<0.2$, $x+y+z+b=1$, M may be one or more selected from the group consisting of Mg, Ca, Sb, Ce, Ti, Zr, Sr, Al, Zn, Mo, and B, and optionally, $0.8<x<1$.

According to any aspect of the present application, the second positive electrode additive may comprise at least one selected from the group consisting of $LiNi_{0.96}Co_{0.02}Mn_{0.02}O_2$, $Li_5FeO_4$ and $Li_2NiO_2$.

According to a second aspect of the present application, provided is a secondary battery comprising a positive electrode sheet including a positive electrode active material layer obtained by coating and drying the positive electrode slurry of any one of the above-mentioned aspects.

According to a third aspect of the present application, provided is a battery module comprising the secondary battery according to the second aspect of the present application.

According to a fourth aspect of the present application, provided is a battery pack comprising the battery module

according to the third aspect of the present application.

According to a fifth aspect of the present application, provided is an electrical apparatus comprising at least one of the secondary batteries of the second aspect of the present application, the battery module of the third aspect of the present application, and the battery pack of the fourth aspect of the present application.

Beneficial effects

The positive electrode slurry provided according to the present application, although comprising a polymer having a repeating unit represented by the above-mentioned structural formula 3 as a binder and comprising a second positive electrode additive with a pH of greater than or equal to 10.0, still has good fluidity in the standing time of at least 24 h after preparation, so it meets the technical requirements of the actual manufacturing process of the secondary battery. The first positive electrode additive contained in the positive electrode slurry of the present application may be used as an alkali binding agent to reduce the alkalinity of the second positive electrode additive, thereby protecting the positive electrode slurry against removal of HF due to the nucleophilic attack of the binder polymer by the strongly alkaline second positive electrode additive during the standing and processing of the positive electrode slurry. Removal of HF will finally lead to chemical gelation of the positive electrode slurry. As such, the standing stabilization time of the positive electrode slurry is prolonged.

In addition, compared with the conventional secondary battery prepared from the positive electrode slurry comprising the second positive electrode additive and the PVDF-based binder, for the secondary battery prepared from the positive electrode slurry of the present application, the gas evolution in the process of formation can be greatly reduced, and high temperature storage characteristics are also improved.

**Description of Drawings**

Fig. 1 is a schematic view of a secondary battery according to an embodiment of the present application;
Fig. 2 is an exploded view of the secondary battery according to the embodiment of the present application shown in Fig. 1;
Fig. 3 is a schematic view of a battery module according to an embodiment of the present application;
Fig. 4 is a schematic view of a battery pack according to an embodiment of the present application;
Fig. 5 is an exploded view of the battery pack according to the embodiment of the present application shown in Fig. 4.
Fig. 6 is a schematic view of an electrical apparatus using a secondary battery according to an embodiment of the present application as the power source.

Description of reference numerals:

1 battery pack; 2 upper box; 3 lower box; 4 battery module; 5 secondary battery; 51 case; 52 electrode assembly; 53 top cover assembly.

**Detailed Description**

Hereinafter, the electrode sheet of the present application is described in details, where unnecessary detailed description may be omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the following descriptions and embodiments are provided for fully understanding the present application by those skilled in the art, and are not intended to limit the subject matter recited in the claims.

Unless otherwise specified, all the embodiments and optional embodiments of the present application can be combined with each other to form new technical solutions.

Unless otherwise specified, all technical features and optional technical features of the present application can be combined with each other to form new technical solutions.

The positive electrode slurry of the present application, the secondary battery, battery module, battery pack and electrical apparatus prepared using the same are detailed below.

A first embodiment of the present application provides a positive electrode slurry comprising a lithium-containing phosphate material, a first positive electrode additive, a second positive electrode additive and a binder, wherein,

the first positive electrode additive is at least one of a compound represented by structural formula 1 and a compound

represented by structural formula 2 below:

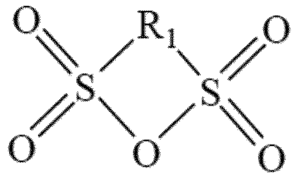
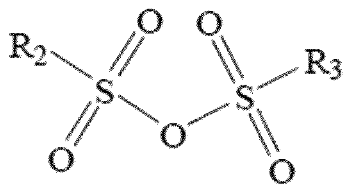

Structural formula 1 Structural formula 2

wherein $R_1$ is selected from one of C2-C4 alkylene, alkenylene and derivatives thereof substituted or unsubstituted by halogen; $R_2$ and $R_3$ are each independently alkyl, alkenyl, alkynyl or aryl substituted or unsubstituted by halogen; the binder includes a polymer having a repeating unit represented by structural formula 3 below:

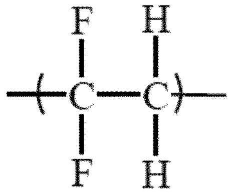

Structural formula 3

wherein the pH of the second positive electrode additive is greater than or equal to 10.0.

In the present application, $R_1$ may be ethylene, propylene, butylene, pentylene, hexylene, heptylene, octylene and derivatives thereof substituted by halogen, such as fluoroethylene, fluoropropylene, and fluorobutylene; $R_1$ may also be vinylene, propenylene, butenylene, pentenylene, hexenylene, heptenylene, octenylene and derivatives thereof substituted by halogen, such as fluorovinylene, fluoropropenylene, and fluorobutenylene.

In the present application, $R_2$ and $R_3$ may each independently be: methyl, ethyl, propyl, butyl, pentyl, hexyl, heptyl, octyl and derivatives thereof substituted by halogen, such as fluoromethyl, fluoroethyl, fluoropropyl, fluorobutyl, fluoropentyl, fluorohexyl, fluoroheptyl, and fluorooctyl; vinyl, propenyl, butenyl, pentenyl, hexenyl, heptenyl, octenyl and derivatives thereof substituted by halogen, such as fluorovinyl, fluoropropenyl, and fluorobutenyl; ethynyl, propynyl, butynyl, pentynyl, hexynyl, heptynyl, octynyl and derivatives thereof substituted by halogen, such as fluoroethynyl, fluoropropynyl, and fluorobutynyl; or phenyl, benzyl, phenethyl, phenylpropyl, phenylbutyl and derivatives thereof substituted by halogen, such as fluorobenzyl, fluorophenethyl, fluorophenpropyl, and fluorophenbutyl.

In the present application, the above-mentioned halogen is not particularly limited, and may be, for example, fluorine, chlorine, bromine and iodine.

In the present application, the binder includes a polymer having a repeating unit represented by the above-mentioned structural formula 3. In consideration of the adhesiveness of the binder, the molar percentage of the repeating unit represented by the above-mentioned structural formula 3 in the above-mentioned polymer is preferably 90% or more. In this case, the adhesiveness of the above-mentioned polymer is more excellent.

In the present application, the pH of the second positive electrode additive is greater than or equal to 10.0; optionally, the pH of the second positive electrode additive may be greater than or equal to 10.5, 11.0, 11.5, 12.0, 12.5, 13.0 and 13.5. When the second positive electrode additive with a pH of greater than or equal to 10.0 is used in the positive electrode slurry, due to the strong alkalinity (pH>10.0) of the above-mentioned second positive electrode additive, the polymer as the binder having the repeating unit represented by the following structural formula 3 tends to have the HF molecule removed and continuous double bonds formed on the molecular chain, and the double bonds may be broken and cross-linked with other molecular chains, so the positive electrode slurry is prone to chemical gelation.

The positive electrode slurry provided according to the present application, although comprising a polymer having a repeating unit represented by the above-mentioned structural formula 3 as a binder and comprising a second positive electrode additive with a pH of greater than or equal to 10.0, still has good fluidity in the standing time of at least 24 h after preparation, so it meets the technical requirements of the actual manufacturing process of the secondary battery. The reason for this is as follows. The first positive electrode additive contained in the positive electrode slurry of the present application may be used as an alkali binding agent to reduce the alkalinity of the second positive electrode

additive, thereby protecting positive electrode slurry against removal of HF due to the nucleophilic attack of the binder polymer by the highly alkaline second positive electrode additive during the standing and processing of the positive electrode slurry. Removal of HF will finally lead to chemical gelation of the positive electrode slurry. As such, the standing stabilization time of the positive electrode slurry is prolonged.

In addition, compared with secondary batteries prepared from the positive electrode slurry comprising the second positive electrode additive and the polymer as the binder having the repeating unit represented by the above-mentioned structural formula 3, for the secondary battery prepared from the positive electrode slurry of the present application, the gas evolution in the process of formation can be greatly reduced, and high temperature storage characteristics are also improved. It is speculated that this may be due to the following two reasons: on the one hand, the first positive electrode additive in the positive electrode sheet undergoes an oxidative polymerization reaction on the surface of the second positive electrode additive in the process of battery formation to form a dense protective layer; on the other hand, during the preparation of the positive electrode slurry, the first positive electrode additive reacts on the surface of the second positive electrode additive to generate a sulfur-containing substance and covers the surface of the second positive electrode additive. The above product can reduce the surface activity of the second positive electrode additive, thereby inhibiting the oxidative decomposition of the electrolyte solution, thus greatly reducing gas evolution in the process of the battery formation, and improving the high temperature storage characteristics of the battery.

In some embodiments, the mass ratio of the first positive electrode additive to the second positive electrode additive may be 0.01:100 - 100:100. Optionally, the mass ratio of the first positive electrode additive to the second positive electrode additive may be 0.5:100 - 9:100, 1:100 - 80:100, 4:100 - 65:100, 5:100 - 55:100, 6:100 - 40:100, 7:100 - 36:100, 8:100 - 27:100, 9:100 - 22:100, 10:100 - 18:100, 11:100 - 17:100, 12:100 - 19:100, 8:100 - 16:100, 9:100 - 15:100 and 7:100 - 15:100.

In the present application, when the mass ratio of the first positive electrode additive to the second positive electrode additive is within the above range, the effect of prolonging the standing stabilization time of the positive electrode slurry may be significant. On the other hand, when the mass ratio of the first positive electrode additive to the second positive electrode additive is within the above range, even if the second positive electrode additive is a lithium supplement, the first positive electrode additive will hardly consume the active lithium ions of the lithium supplement, thereby maintaining the capacity of the battery.

In some embodiments, the $R_1$ may be ethylene, propylene, butylene, vinylene or propenylene substituted or unsubstituted by halogen. For example, $R_1$ may be ethylene, propylene, or butylene; or it may be fluoroethylene, fluoropropylene, or fluorobutylene.

In some embodiments, the $R_2$ and $R_3$ may each independently be methyl, ethyl, propyl or butyl substituted or unsubstituted by halogen. For example, $R_2$ and $R_3$ may each independently be methyl, ethyl, propyl, or butyl; or may each independently be fluoromethyl, fluoroethyl, fluoropropyl, or fluorobutyl.

When $R_1$ or $R_2$ and $R_3$ are the above-mentioned groups, on the one hand, it can be ensured that the first positive electrode additive itself will not cause the physical gelation of the slurry (for example, physical gelation of the slurry due to hydrogen bonds and other forces between the molecules of the first positive electrode additive and the lithium-containing phosphate material); on the other hand, after the first positive electrode additive reacts on the surface of the second positive electrode additive, it can partially isolate the electrolyte solution on the surface of the second positive electrode additive.

In some embodiments, from the viewpoints of prolonging the standing stabilization time of the positive electrode slurry, reducing gas evolution during the formation of the secondary battery, and improving the high-temperature storage characteristics of the secondary battery, the first positive electrode additive may be selected from at least one of the following:

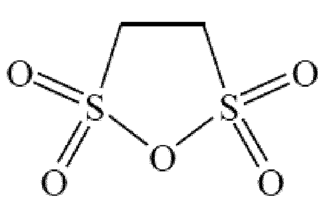

Compound 1

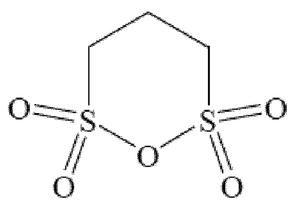

Compound 2

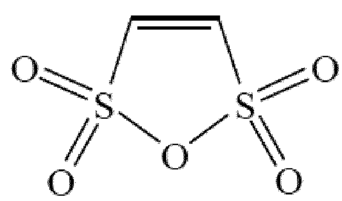

Compound 3

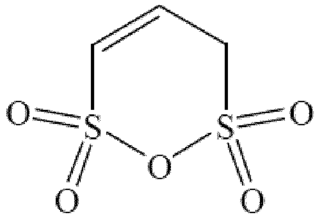 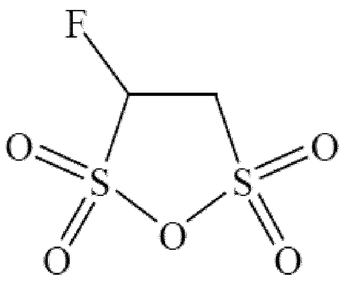 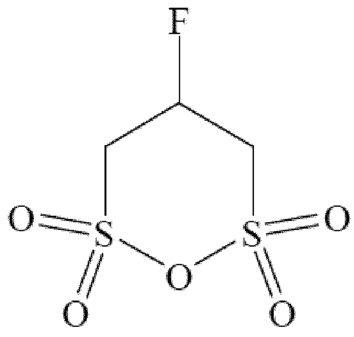

Compound 4 Compound 5 Compound 6

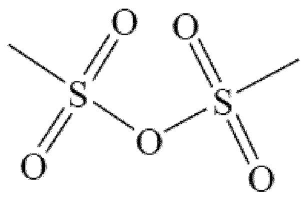 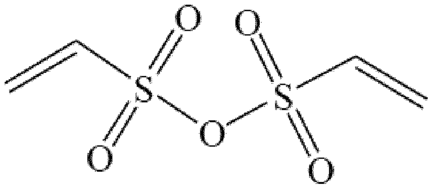 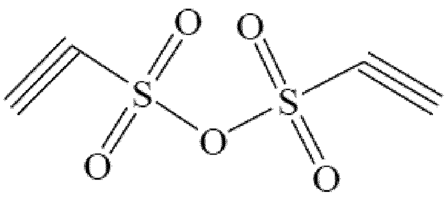

Compound 7 Compound 8 Compound 9

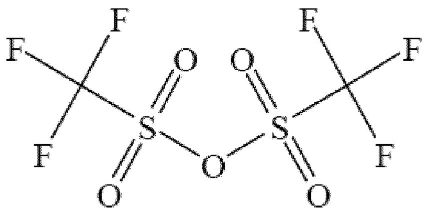 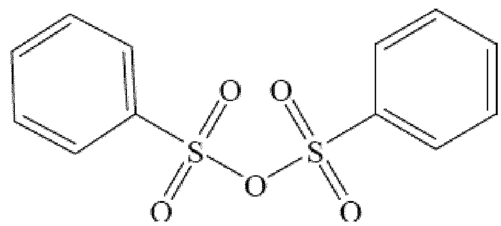

Compound 10 Compound 11 .

In some embodiments, the binder may comprise at least one selected from the group consisting of: vinylidene fluoride homopolymer, vinylidene fluoride-acrylic acid copolymer, vinylidene fluoride-acrylate copolymer, vinylidene fluoride-tetrafluoroethylene copolymer, vinylidene fluoride-pentafluoropropylene copolymer, vinylidene fluoride-pentafluoropropylene-tetrafluoroethylene copolymer, vinylidene fluoride-perfluoromethyl vinyl ether-tetrafluoroethylene copolymer, and vinylidene fluoride-chlorotrifluoroethylene copolymer; optionally, the binder may be vinylidene fluoride-acrylic acid copolymer or vinylidene fluoride homopolymer.

In some embodiments, the pH of the lithium-containing phosphate material may be less than 10.0. When the pH of the lithium-containing phosphate material is greater than or equal to 10.0, chemical gelation of the positive electrode slurry is likely to occur during the standing and processing processes after preparation.

In some embodiments, the lithium-containing phosphate material may comprise at least one selected from the group consisting of $LiFePO_4$, $LiFeVPO_4$, $LiFeMnPO_4$, carbon-coated $LiFePO_4$, carbon-coated $LiFeVPO_4$, and carbon-coated $LiFeMnPO_4$. When the above-described lithium-containing phosphate material is used as the active material, the life characteristics and capacity characteristics of the battery can be improved.

In some embodiments, from the viewpoint of improving the capacity characteristics of the secondary battery, the second positive electrode additive may contain at least one selected from the group consisting of $Li_2MnO_3$, $Li_2MoO_3$, $Li_2RuO_3$, $Li_3VO_4$, $Li_2NiO_2$, $Li_6CoO_4$, $Li_5FeO_4$, $Li_2C_2$, $Li_3N$, $Li_2S$ and materials represented by the general formula $Li_{1+a}[Ni_xCo_yM_zM_b]O_2$,

wherein 0.6<x<1, 0≤y<0.3, 0≤z<0.3, 0<a<0.2, 0<b<0.2, x+y+z+b=1, M may be one or more selected from the group consisting of Mg, Ca, Sb, Ce, Ti, Zr, Sr, Al, Zn, Mo, and B, and optionally, 0.8<x<1. In the present application, the second positive electrode additive is not particularly limited, and different materials can be used according to actual needs. For example, in order to improve the capacity characteristics of the secondary battery, the materials listed above may be used.

In some embodiments, the second positive electrode additive may comprise at least one selected from the group consisting of $LiNi_{0.96}Co_{0.02}Mn_{0.02}O_2$, $Li_5FeO_4$ and $Li_2NiO_2$.

According to a second aspect of the present application, provided is a secondary battery comprising a positive

electrode sheet including a positive electrode active material layer obtained by coating and drying the positive electrode slurry of any one of the above-mentioned aspects.

In this embodiment, the types of the electrode sheet are not particularly limited. For example, the electrode sheet may be a positive electrode sheet or a negative electrode sheet.

## Detailed description of embodiments of the invention

The secondary battery, the battery module, the battery pack, and the electrical apparatus of the present application will be described in detail below with reference to the drawings.

In an embodiment of the present application, a secondary battery is provided. Generally, the secondary battery includes a positive electrode sheet, a negative electrode sheet, an electrolyte, and a separator. During the charge and discharge process of the battery, lithium ions are intercalated and deintercalated repeatedly between the positive electrode sheet and the negative electrode sheet. The electrolyte serves to conduct lithium ions between the positive electrode sheet and the negative electrode sheet. The separator is provided between the positive electrode sheet and the negative electrode sheet, and mainly functions to prevent a short circuit between the positive electrode and the negative electrode while allowing lithium ions to pass through. The constituent elements of the secondary battery will be described in detail below.

[Positive electrode sheet]

The positive electrode sheet comprises a positive electrode current collector, and a positive electrode active material layer provided on at least one surface of the positive electrode current collector. The positive electrode active material layer may be obtained by applying and drying the positive electrode slurry described in any one of the above embodiments.

By way of example, the positive electrode current collector has two opposite surfaces in the direction of its own thickness, and the positive electrode active material layer is provided on either or both of the two opposite surfaces of the positive electrode current collector.

In some embodiments, the positive electrode current collector may be a metal foil or a composite current collector. For example, an aluminum foil may be used as the metal foil. The composite current collector may comprise a polymer material substrate and a metal layer formed on at least one surface of the polymer material substrate. The composite current collector may be formed by forming the metal material (such as, aluminum, aluminum alloy, nickel, nickel alloy, titanium, titanium alloy, silver and silver alloy) on the polymer material substrate (such substrate as polypropylene (PP), polyethylene terephthalate (PET), polybutylene terephthalate (PBT), polystyrene (PS), and polyethylene (PE)).

In some embodiments, the positive electrode active material layer optionally comprises a conductive agent. For example, a conductive agent commonly used in the art may be used. The conductive agent may include at least one selected from Super P, acetylene black, carbon black, Ketjen black, carbon nanotube, carbon nanorod, graphene, and carbon nanofiber.

In some embodiments, the positive electrode active material layer coated on the positive electrode current collector may be prepared by dispersing the components for preparing the positive electrode sheet, for example, the positive electrode active material, the conductive agent, the binder and any other components in a solvent (the solvent may include one or several of N-methyl pyrrolidone (NMP), triethyl phosphate, N,N-dimethylformamide, N,N-diethylformamide, dimethyl sulfoxide, etc.) to form a positive electrode slurry; and applying the positive electrode slurry on a positive electrode current collector, followed by oven drying, cold pressing and other procedures, to obtain the positive electrode active material layer coated on the positive electrode current collector. Alternatively, in another embodiment, the positive electrode active material layer coated on the positive electrode current collector may be prepared by casting the positive electrode slurry for forming the positive electrode active material layer on a separate carrier, and then laminating a film peeled from the carrier on the positive electrode current collector.

[Negative electrode sheet]

The negative electrode sheet may comprise a negative electrode current collector, and a negative electrode active material layer provided on at least one surface of the negative electrode current collector. The negative electrode active material layer may include a negative electrode active material, and optionally a binder, a conductive agent, and other auxiliaries.

By way of example, the negative electrode current collector has two opposite surfaces in the direction of its own thickness, and the negative electrode active material layer is provided on either or both of the two opposite surfaces of the negative electrode current collector.

In some embodiments, the negative electrode current collector may be a metal foil or a composite current collector. For example, a copper foil may be used as the metal foil. The composite current collector may comprise a polymer material substrate and a metal layer formed on at least one surface of the polymer material substrate. The composite current collector may be formed by forming the metal material (such as, copper, copper alloy, nickel, nickel alloy, titanium, titanium alloy, silver and silver alloy) on the polymer material substrate (such substrate as polypropylene (PP), polyethylene terephthalate (PET), polybutylene terephthalate (PBT), polystyrene (PS), and polyethylene (PE)).

In some embodiments, the negative electrode active material may be a negative electrode active material for batteries known in the art. For example, the negative electrode active material may include at least one of artificial graphite, natural graphite, soft carbon, hard carbon, silicon-based materials, tin-based materials, lithium titanate, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, and a tin alloy. However, the present application is not limited to these materials, and other conventional materials useful as negative electrode active materials for batteries may also be used. These negative electrode active materials may be used alone or in combination of two or more thereof.

In some embodiments, the negative electrode active material layer may also optionally include a binder. The binder may be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer may further optionally comprise a conductive agent. The conductive agent may be at least one selected from Super P, acetylene black, carbon black, Ketjen black, carbon nanotube, carbon nanorod, graphene, and carbon nanofiber.

In some embodiments, the negative electrode active material layer may further optionally comprise other auxiliaries, for example, a thickener (e.g., sodium carboxymethyl cellulose (CMC-Na)) and the like.

In some embodiments, the negative electrode active material layer coated on the negative electrode current collector may be prepared by dispersing the components for preparing the negative electrode sheet, for example, the negative electrode active material, the conductive agent, the binder and any other components in a solvent (for example, deionized water) to form a negative electrode slurry; and applying the negative electrode slurry on a negative electrode current collector, followed by oven drying, cold pressing and other procedures, to obtain the negative electrode active material layer coated on the negative electrode current collector. Alternatively, in another embodiment, the negative electrode active material layer may be prepared by casting the negative electrode slurry for forming the negative electrode active material layer on a separate carrier, and then laminating a film layer peeled from the carrier on the negative electrode current collector.

[Electrolyte]

The electrolyte serves to conduct ions between the positive electrode sheet and the negative electrode sheet. The type of the electrolyte is not particularly limited in the present application, and may be selected according to needs. For example, the electrolyte may be in a liquid or gel state.

In addition, the electrolyte according to the embodiment of the present application may comprise an additive. The additive may include an additive commonly used in the art. The additive may include, for example, halogenated alkylene carbonates (e.g., ethylene difluorocarbonate), pyridine, triethyl phosphite, triethanolamine, cyclic ethers, ethylenediamine, ethylene glycol dimethyl ether, hexamethylphosphoric triamide, nitrobenzene derivatives, sulfur, quinoneimine dyes, N-substituted oxazolidinones, N,N-substituted imidazolidines, ethylene glycol dialkyl ethers, ammonium salts, pyrrole, 2-methoxyethanol or aluminum trichloride. In this case, based on the total weight of the electrolyte, the additive may be included in an amount of 0. 1wt% to 5wt% or the amount of the additive may be adjusted by those skilled in the art according to actual needs.

In some embodiments, an electrolyte solution is used as the electrolyte. The electrolyte solution comprises an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the secondary battery may include an outer package. The outer package may be used

to encapsulate the above-mentioned electrode assembly and electrolyte.

In some embodiments, the outer package of the secondary battery may be a hard case, such as a hard plastic case, an aluminum case, a steel case, and the like. The outer package of the secondary battery may also be a soft pack, such as a bag-type soft pack. The material of the soft pack may be plastic. Examples of the plastic may include polypropylene, polybutylene terephthalate and polybutylene succinate, etc.

The shape of the secondary battery is not particularly limited in the present application, and it may be cylindrical, square, or any other shape. For example, Fig. 1 shows a secondary battery 5 with a square structure as an example.

In some embodiments, referring to Fig. 2, the outer package may include a case 51 and a cover plate 53. Here, the case 51 includes a bottom plate and a side plate connected to the bottom plate, where the bottom plate and the side plate define an accommodating cavity. The case 51 has an opening that communicates with the accommodating cavity, and the cover plate 53 may cover the opening to close the accommodating cavity. The positive electrode sheet, the negative electrode sheet, and the separator may be formed into an electrode assembly 52 by a winding process or a lamination process. The electrode assembly 52 is encapsulated within the accommodating cavity. The electrolyte solution impregnates the electrode assembly 52. The number of electrode assemblies 52 contained in the secondary battery 5 may be one or more, and may be selected by those skilled in the art according to actual needs.

In some embodiments, secondary batteries may be assembled into a battery module, the number of secondary batteries contained in the battery module may be one or more, and the specific number may be selected by those skilled in the art according to the application and capacity of the battery module.

Fig. 3 shows a battery module 4 as an example. Referring to Fig. 3, in the battery module 4, a plurality of secondary batteries 5 are sequentially arranged along the length direction of the battery module 4. Of course, any other arrangement of the plurality of secondary batteries 5 is also possible. Further, the plurality of secondary batteries 5 may further be fixed by fasteners.

Optionally, the battery module 4 may further include a case having an accommodating space, in which the plurality of secondary batteries 5 are accommodated.

In some embodiments, the above-mentioned battery modules may further be assembled into a battery pack. The number of battery module contained in the battery pack may be one or more, and may be selected by those skilled in the art according to the use and capacity of the battery pack.

Fig. 4 and Fig. 5 show a battery pack 1 as an example. Referring to Fig. 4 and Fig. 5, the battery pack 1 may comprise a battery box and a plurality of battery modules 4 provided in the battery box. The battery box includes an upper box 2 and a lower box 3, wherein the upper box 2 may cover the lower box 3, and forms an enclosed space for accommodating the battery module 4. The plurality of battery modules 4 may be arranged in the battery box in any manner.

In addition, the present application further provides an electrical apparatus, and the electrical apparatus includes at least one of the secondary batteries, the battery module, or the battery pack provided in the present application. The secondary battery, battery module, or battery pack may be used as a power source for the electrical apparatus, and may also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack may be selected according to its use requirements.

Fig. 6 shows an electrical apparatus as an example. The electrical apparatus is an all-electric vehicle, a hybrid electric vehicle, a plug-in hybrid electric vehicle, or the like. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

## Examples

Examples of the present application will be described in detail hereinafter. The examples described below are exemplary and only used to explain the present application, and are not to be construed as limiting the present application. Where specific techniques or conditions are not specified in the examples, the techniques or conditions described in the literatures of the art or the product specifications are followed. Where the manufacturers are not specified, the reagents or instruments used are conventional products that are commercially available.

(1) Preparation of positive electrode slurry

In the present application, the positive electrode slurry is prepared as follows.

1) The positive electrode active material, conductive agent, binder, and second positive electrode additive were added to the stirring tank, and stirred;
2) According to actual needs, an appropriate amount of NMP was added to the dry powder mixed in step 1) with stirring;
3) The first positive electrode additive was added to the slurry in step 2) with stirring;
4) According to actual needs, the viscosity of the slurry obtained in step 3) was adjusted by NMP;

Among them, the composition and mass ratio of the first positive electrode additive, the second positive electrode additive, the conductive agent, the binder and the positive electrode active material in the positive electrode slurry are listed in Table 1 below, and the solid content of the positive electrode slurry is 50wt% - 80wt%.

Table 1

| | Second positive electrode additive | | Positive electrode active material | | Conductive agent (Super P; parts by mass) | Binder (parts by mass) | First positive electrode additive (parts by mass) |
|---|---|---|---|---|---|---|---|
| | Content (parts by mass) | pH | parts by mass | pH | | | |
| Example 1 | $LiNi_{0.96}Co_{0.02}Mn_{0.02}O_2$ (5) | 12.3 | Carbon black-coated $LiFePO_4$ (91.8) | 9.6 | 1 | PVDF (2) | Compound 1 (0.2) |
| Example 2 | $LiNi_{0.96}Co_{0.02}Mn_{0.02}O_2$ (5) | 12.3 | Carbon black-coated $LiFePO_4$ (91.8) | 9.6 | 1 | PVDF (2) | Compound 2 (0.2) |
| Example 3 | $LiNi_{0.96}Co_{0.02}Mn_{0.02}O_2$ (5) | 12.3 | Carbon black-coated $LiFePO_4$ (91.8) | 9.6 | 1 | PVDF (2) | Compound 3 (0.2) |
| Example 4 | $LiNi_{0.96}Co_{0.02}Mn_{0.02}O_2$ (5) | 12.3 | Carbon black-coated $LiFePO_4$ (91.8) | 9.6 | 1 | PVDF (2) | Compound 4 (0.2) |
| Example 5 | $LiNi_{0.96}Co_{0.02}Mn_{0.02}O_2$ (5) | 12.3 | Carbon black-coated $LiFePO_4$ (91.8) | 9.6 | 1 | PVDF (2) | Compound 5 (0.2) |
| Example 6 | $LiNi_{0.96}Co_{0.02}Mn_{0.02}O_2$ (5) | 12.3 | Carbon black-coated $LiFePO_4$ (91.8) | 9.6 | 1 | PVDF (2) | Compound 6 (0.2) |
| Example 7 | $LiNi_{0.96}Co_{0.02}Mn_{0.02}O_2$ (5) | 12.3 | Carbon black-coated $LiFePO_4$ (91.8) | 9.6 | 1 | PVDF (2) | Compound 7 (0.2) |

(continued)

| | Second positive electrode additive | | Positive electrode active material | | Conductive agent (Super P; parts by mass) | Binder (parts by mass) | First positive electrode additive (parts by mass) |
|---|---|---|---|---|---|---|---|
| | Content (parts by mass) | pH | parts by mass | pH | | | |
| Example 8 | $LiNi_{0.96}Co_{0.02}Mn_{0.02}O_2$ (5) | 12.3 | Carbon black-coated $LiFePO_4$ (91.8) | 9.6 | 1 | PVDF (2) | Compound 8 (0.2) |
| Example 9 | $LiNi_{0.96}Co_{0.02}Mn_{0.02}O_2$ (5) | 12.3 | Carbon black-coated $LiFePO_4$ (91.8) | 9.6 | 1 | PVDF (2) | Compound 9 (0.2) |
| Example 10 | $LiNi_{0.96}Co_{0.02}Mn_{0.02}O_2$ (5) | 12.3 | Carbon black-coated $LiFePO_4$ (91.8) | 9.6 | 1 | PVDF (2) | Compound 10 (0.2) |
| Example 11 | $LiNi_{0.96}Co_{0.02}Mn_{0.02}O_2$ (5) | 12.3 | Carbon black-coated $LiFePO_4$ (91.8) | 9.6 | 1 | PVDF (2) | Compound 11 (0.2) |
| Example 12 | $Li_5FeO_4$ (5) | 12.7 | Carbon black-coated $LiFePO_4$ (91.8) | 9.6 | 1 | PVDF (2) | Compound 1 (0.2) |
| Example 13 | $Li_2NiO_2$ (5) | 12.9 | Carbon black-coated $LiFePO_4$ (91.8) | 9.6 | 1 | PVDF (2) | Compound 1 (0.2) |
| Example 14 | $LiNi_{0.96}Co_{0.02}Mn_{0.02}O_2$ (5) | 12.3 | Carbon black-coated $LiFePO_4$ (91.5) | 9.6 | 1 | PVDF (2) | Compound 1 (0.05) |
| Example 15 | $LiNi_{0.96}Co_{0.02}Mn_{0.02}O_2$ (5) | 12.3 | Carbon black-coated $LiFePO_4$ (91.5) | 9.6 | 1 | PVDF (2) | Compound 1 (0.1) |
| Example 16 | $LiNi_{0.96}Co_{0.02}Mn_{0.02}O_2$ (5) | 12.3 | Carbon black-coated $LiFePO_4$ (91) | 9.6 | 1 | PVDF (2) | Compound 1 (1) |

(continued)

| | Second positive electrode additive | | Positive electrode active material | | Conductive agent (Super P; parts by mass) | Binder (parts by mass) | First positive electrode additive (parts by mass) |
|---|---|---|---|---|---|---|---|
| | Content (parts by mass) | pH | parts by mass | pH | | | |
| Example 17 | $LiNi_{0.96}Co_{0.02}Mn_{0.02}O_2$ (5) | 12.3 | Carbon black-coated $LiFePO_4$ (89) | 9.6 | 1 | PVDF (2) | Compound 1 (3) |
| Example 18 | $LiNi_{0.96}Co_{0.02}Mn_{0.02}O_2$ (5) | 12.3 | Carbon black-coated $LiFePO_4$ (87) | 9.6 | 1 | PVDF (2) | Compound 1 (5) |
| Example 19 | $LiNi_{0.96}Co_{0.02}Mn_{0.02}O_2$ (5) | 12.3 | Carbon black-coated $LiFePO_4$ (87) | 9.6 | 1 | PVDF (2) | Compound 1 (6) |
| Example 20 | $LiNi_{0.96}Co_{0.02}Mn_{0.02}O_2$ (5) | 12.3 | Carbon black-coated $LiFePO_4$ (91.8) | 9.6 | 1 | PVDF (1.8 )+P (VDF-co-AA) (0.2) | Compound 1 (0.2) |
| Example 21 | $LiNi_{0.96}Co_{0.02}Mn_{0.02}O_2$ (5) | 12.3 | Carbon black-coated $LiFePO_4$ (91.8) | 9.3 | 1 | PVDF (2) | Compound 1 (0.2) |
| Example 22 | $LiNi_{0.96}Co_{0.02}Mn_{0.02}O_2$ (5) | 12.3 | Carbon black-coated LiMnFePO4 | 10.1 | 1 | PVDF (2) | Compound 1 (0.2) |
| Comparative Example 1 | $LiNi_{0.96}Co_{0.02}Mn_{0.02}O_2$ (5) | 12.3 | Carbon black-coated $LiFePO_4$ (92) | 9.6 | 1 | PVDF (2) | - |
| Comparative Example 2 | $Li_5FeO_4$ (5) | 12.7 | Carbon black-coated $LiFePO_4$ (92) | 9.6 | 1 | PVDF (2) | - |
| Comparative Example 3 | $Li_2NiO_2$ (5) | 12.9 | Carbon black-coated $LiFePO_4$ (92) | 9.6 | 1 | PVDF (2) | - |

(continued)

| | Second positive electrode additive | | Positive electrode active material | | Conductive agent (Super P; parts by mass) | Binder (parts by mass) | First positive electrode additive (parts by mass) |
|---|---|---|---|---|---|---|---|
| | Content (parts by mass) | pH | parts by mass | pH | | | |
| Comparative Example 4 | - | - | Carbon black-coated $LiFePO_4$ (97) | 9.6 | 1 | PVDF (2) | - |

(2) Preparation of positive electrode sheet

A positive electrode current collector was evenly coated with the positive electrode slurry, and then a positive electrode sheet was obtained after oven drying and cold pressing.

(3) Preparation of negative electrode sheet

The negative electrode active material artificial graphite, the conductive agent acetylene black, the binder styrene butadiene rubber (SBR), and the thickener sodium carboxymethyl cellulose (CMC-Na) in a mass ratio of 94:2:2:2 were dissolved in the solvent deionized water, and mixed uniformly with the solvent deionized water to prepare a negative electrode slurry. Then, the negative electrode slurry was uniformly coated on a copper foil as the negative electrode current collector, and then dried, cold pressed, and cut to obtain a negative electrode sheet.

(4) Preparation of electrolyte solution

In a glove box under an argon atmosphere (where $H_2O$ <0.1 ppm, and $O_2$<0.1 ppm), 1 mol/L $LiPF_6$ was dissolved in an organic solvent (EC/DMC/EMC=1/1/1 (mass ratio)), and stirred to obtain the corresponding electrolyte solution.

(5) Preparation of secondary battery

A polyethylene film with a thickness of 14 μm was used as the separator, and the above-mentioned positive electrode sheet and negative electrode sheet were wound into a bare battery cell with the separator placed therebetween. The bare battery cell was placed in a battery case aluminum-plastic film bag, dried, an electrolyte solution was then injected, and a secondary battery was prepared through processes such as formation and standing.

In the examples and comparative examples of the present application, the particle size of the carbon-coated $LiFePO_4$ as the positive electrode active material is 1 μm, and the carbon-coated $LiFePO_4$ refers to $LiFePO_4$ coated by carbon sources such as sucrose, glucose carbonized at high temperatures during the sintering of $LiFePO_4$; the particle size of carbon-coated $LiFeMnPO_4$ used as the positive electrode active material is 1 μm, and carbon-coated $LiFeMnPO_4$ refers to $LiFeMnPO_4$ coated by carbon sources such as sucrose, glucose carbonized at high temperatures during the sintering process of $LiFeMnPO_4$. Unless otherwise specified, the materials shown in Table 1 above are all commercially available.

## Experimental examples

In the present application, the pH of the second positive electrode additive and the positive electrode active material shown in Table 1 was measured as follows.

(1) pH test method:

1) 5 g of the powder sample of the second positive additive or positive electrode active material was weighed and put into a conical flask;
2) The powder sample and deionized water as the solvent in a ratio of 1:9 were added to the above conical flask,

a magnetic rotor was placed into the flask, and then flask was sealed with a sealing film;
3) The above-mentioned conical flask was placed in the center of a magnetic stirring table and stirred for 30 min;
4) After completion of stirring, the flask was allowed to stand for 1.5 h;
5) A calibrated pH electrode (PH meter model: S220/Mettler acidity meter) was soaked in the solution, and its reading was taken after being stabilized for 30 s to obtain the pH.

(2) Method for characterization of the stability of positive electrode slurry

1) The positive electrode slurry was placed into a 500 mL glass flask, which was then covered with plastic wrap and allowed to stand still, and the initial time point for the positive electrode slurry to stand still was recorded;
2) The gelation state of the positive electrode slurry after standing for different periods of time was observed. The gelation state is divided into the following grades:

a. No gelation: the positive electrode slurry has good fluidity, and the positive electrode slurry can be quickly leveled after falling on the plane;
b. Mild gelation: The positive electrode slurry has good fluidity, but there is obvious reflection on the surface of the positive electrode slurry, the positive electrode slurry can be quickly leveled after falling on the plane, and the surface of the positive electrode slurry is protruding;
c. Moderate gelation: The positive electrode slurry has poor fluidity and is flocculent; the positive electrode slurry is kind of like a flocculent, but has no properties of solids; there are no jelly lumps;
d. Severe gelation: The positive electrode slurry has no fluidity and is jelly-like; the positive electrode slurry has properties of solids and has no fluidity, and can be lifted whole.

(3) Test method for gas evolution in formation of secondary batteries

The volume of the above-prepared secondary battery was measured by the drainage method at 25°C and recorded as $V_0$; then the above-mentioned secondary battery was charged to 4.5V at 45°C with a constant current of 0.02C, and the charging capacity was recorded as $C_0$. The volume of the above-mentioned secondary battery was measured by the drainage method and recorded as $V_1$.
Gas evolution in formation of secondary battery = $(V_1-V_0)/C_0$.

(4) Ratio of actual capacity to design capacity of the secondary battery

At 25°C, the secondary battery prepared as above was allowed to stand still for 30 min, and then charged to a voltage of 3.65V at a constant current of 1C, then charged at a constant voltage of 3.65V until the current was 0.05C, allowed to stand still for 5 min, and then discharged to a voltage of 2.8V at a constant current of 1C, which is one charge and discharge cycle. The discharge capacity at this point is the actual discharge capacity D0 of the secondary battery prepared above. The design capacity of the secondary battery may be calculated as follows:

$$\text{Ratio (\%) of actual capacity to design capacity of the secondary battery} = (\text{D0/design capacity}) \times 100\%.$$

(5) Test for gas evolution of lithium-ion battery stored at 60°C

The secondary battery prepared above was allowed to stand for 30 min at 25°C, then charged with a constant current of 1C until the voltage was 3.65V, and then charged with a constant voltage of 3.65V until the current was 0.05C. At this point, the volume of the lithium ion battery was measured by the drainage method, and recorded as $V_0$; then the fully charged secondary battery was placed in an incubator at 60°C and stored for 30 d, and the volume was then measured by the drainage method and recorded as V1.

$$\text{Volume expansion rate (\%) of the secondary battery after storage at 60°C for 30 d} = (V_1-V_0)/V_0 \times 100\%.$$

The results measured in the above experimental examples are shown in Table 2 below. The symbol "/" in Table 2 below indicates that the test was not continued after gelation occurred.

Table 2

| | State of the positive electrode slurry standing for different time (h) | | | | | Ratio of actual capacity to design capacity | Gas evolution in formation of the secondary battery (mL/Ah) | Gas evolution after storage at 60°C for 30 d of the secondary battery (mL/Ah) |
|---|---|---|---|---|---|---|---|---|
| | 0 | 2 | 4 | 8 | 24 | | | |
| Example 1 | No gelation | | | | | 100.1% | 3.2 | 1.9 |
| Example 2 | No gelation | | | | | 99.7% | 4.5 | 2.5 |
| Example 3 | No gelation | | | | | 99.6% | 4.4 | 2.6 |
| Example 4 | No gelation | | | | | 100.3% | 3.8 | 2 |
| Example 5 | No gelation | | | | | 100.0% | 4.0 | 2.4 |
| Example 6 | No gelation | | | | | 99.5% | 3.9 | 1.8 |
| Example 7 | No gelation | | | | | 99.8% | 4.1 | 2 |
| Example 8 | No gelation | | | | | 100.1% | 3.5 | 1.5 |
| Example 9 | No gelation | | | | | 100.3% | 3.5 | 1.7 |
| Example 10 | No gelation | | | | | 100.2% | 4.3 | 1.2 |
| Example 11 | No gelation | | | | | 99.9% | 3.7 | 1.5 |
| Example 12 | No gelation | | | | | 99.7% | 11.5 | 2 |
| Example 13 | No gelation | | | | | 99.8% | 17.6 | 2.4 |
| Example 14 | No gelation | | | | | 100.0% | 4.5 | 3.5 |
| Example 15 | No gelation | | | | | 100.1% | 4.0 | 3 |
| Example 16 | No gelation | | | | | 99.7% | 2.9 | 2 |
| Example 17 | No gelation | | | | | 99.5% | 3.0 | 2.3 |
| Example 18 | No gelation | | | | | 99.0% | 2.3 | 1.6 |
| Example 19 | No gelation | | | | | 97.5% | 3.0 | 2.1 |
| Example 20 | No gelation | | | | | 99.8% | 2.7 | 2 |
| Example 21 | No gelation | | | | | 100.2% | 2.3 | 2.4 |
| Example 22 | No gelation | | | | | 100.1% | 2.8 | 1.9 |
| Comparative Example 1 | No gelation | No gelation | Moderate gelation(4 h) | / | | 99.7% | 11.6 | 5.6 |
| Comparative Example 2 | No gelation | Mild gelation | Moderate gelation(4 h) | / | | 100.2% | 23.4 | 7.6 |
| Comparative Example 3 | No gelation | Mild gelation | Severe gelation(4 h) | / | | 99.8% | 38.1 | 8.1 |
| Comparative Example 4 | No gelation | | | | | 100.3% | 4.5 | 3.5 |

It can be seen from Table 2 that the positive electrode slurries of Examples 1 to 22 did not gelate within 24 h after preparation, and had good fluidity.

In addition, compared with the secondary batteries of Comparative Examples 1 to 4, for the secondary batteries prepared from the above-mentioned positive electrode slurry of the present application, the gas evolution in the process of formation could be greatly reduced while maintaining a comparable capacity, and the high temperature storage characteristics were also improved.

From the comparison of Example 12 and Example 13 with Comparative Example 2 and Comparative Example 3, and the comparison of Example 1 with Comparative Example 1, it can be seen that when the positive electrode active material and the second positive electrode additive were the same, for the secondary batteries prepared using the positive electrode slurry of the present application, the gas evolution in the process of formation could be greatly reduced, and the high temperature storage characteristics were also improved.

In addition, it can be seen from the comparison between Example 1 and Comparative Example 4 that the secondary battery of Comparative Example 4 did not exhibit gelation because the positive electrode slurry in the preparation process did not contain the second positive electrode additive having strong alkalinity. However, it was still significantly inferior to the secondary battery of Example 1 of the present application in terms of the gas evolution in formation and the volume expansion rate after storage at 60°C for 30 d of the secondary battery. In other words, even compared with the secondary battery prepared from the positive electrode slurry without the second positive electrode additive having strong alkalinity, the secondary battery of the present application prepared from the positive electrode slurry with the second positive electrode additive having strong alkalinity is also significantly better in terms of gas evolution of formation and the volume expansion rate after storage at 60°C for 30 d.

It should be noted that the present application is not limited to the above embodiments. The above embodiments are merely exemplary, and embodiments having substantially the same technical idea and the same effects within the scope of the technical solution of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A positive electrode slurry comprising a lithium-containing phosphate material, a first positive electrode additive, a second positive electrode additive and a binder, wherein,

   the first positive electrode additive is at least one of a compound represented by structural formula 1 and a compound represented by structural formula 2 below:

   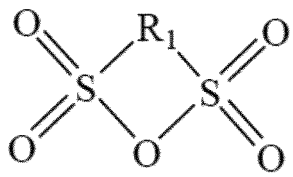

   Structural formula 1

   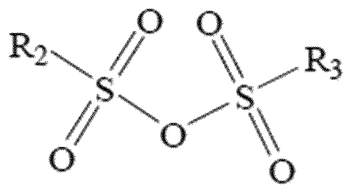

   Structural formula 2

   wherein $R_1$ is selected from one of C2-C4 alkylene, alkenylene and derivatives thereof substituted or unsubstituted by halogen; $R_2$ and $R_3$ are each independently alkyl, alkenyl, alkynyl or aryl substituted or unsubstituted by halogen;
   the binder includes a polymer having a repeating unit represented by structural formula 3 below,

   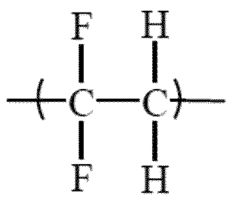

   Structural formula 3

the pH of the second positive electrode additive is greater than or equal to 10.0.

2. The positive electrode slurry according to claim 1, wherein the mass ratio of the first positive electrode additive to the second positive electrode additive is 0.01:100 - 10: 100.

3. The positive electrode slurry according to claim 1 or 2, wherein the $R_1$ is ethylene, propylene, butylene, vinylene or propenylene substituted or unsubstituted by halogen.

4. The positive electrode slurry according to any one of claims 1 to 3, wherein the $R_2$ and $R_3$ are each independently methyl, ethyl, propyl or butyl substituted or unsubstituted by halogen.

5. The positive electrode slurry according to any one of claims 1 to 4, wherein the first positive electrode additive is selected from at least one of:

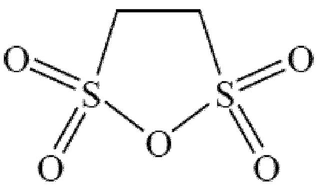

Compound 1

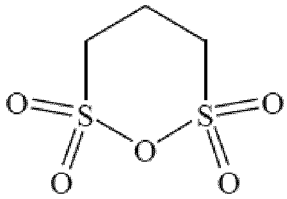

Compound 2

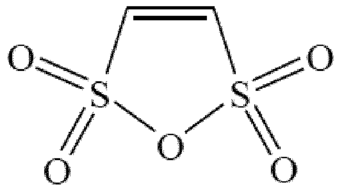

Compound 3

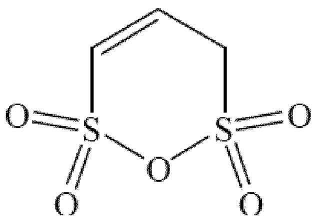

Compound 4

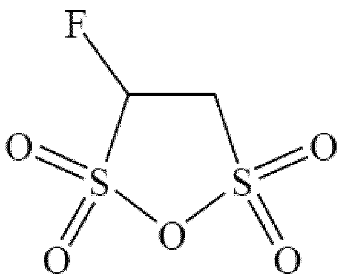

Compound 5

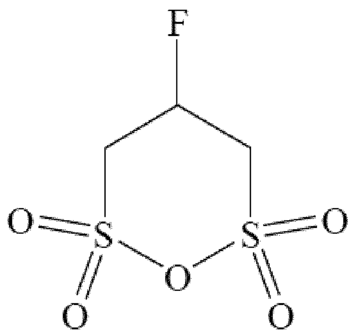

Compound 6

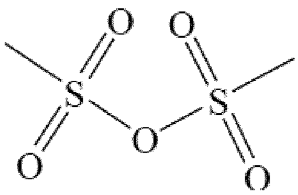

Compound 7

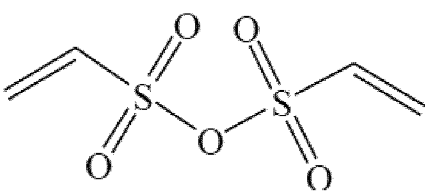

Compound 8

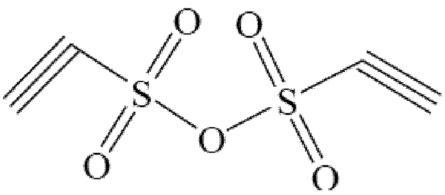

Compound 9

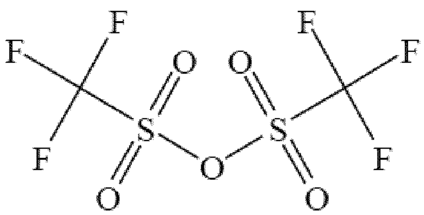

Compound 10

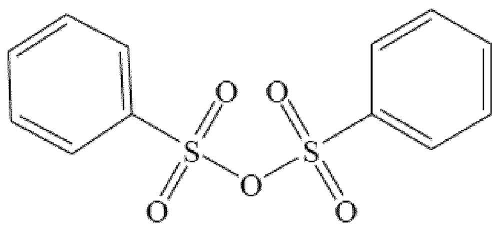

Compound 11.

6. The positive electrode slurry according to any one of claims 1 to 5, wherein the binder comprises at least one selected from the group consisting of: vinylidene fluoride homopolymer, vinylidene fluoride-acrylic acid copolymer, vinylidene fluoride-acrylate copolymer, vinylidene fluoride-tetrafluoroethylene copolymer, vinylidene fluoride-pentafluoropropylene copolymer, vinylidene fluoride-pentafluoropropylene-tetrafluoroethylene copolymer, vinylidene fluoride-perfluoromethyl vinyl ether-tetrafluoroethylene copolymer, and vinylidene fluoride-chlorotrifluoroethylene copolymer; optionally, the binder is vinylidene fluoride-acrylic acid copolymer or vinylidene fluoride homopolymer.

7. The positive electrode slurry according to any one of claims 1 to 6, wherein the pH of the lithium-containing phosphate material is less than 10.0.

8. The positive electrode slurry according to any one of claims 1 to 7, wherein the lithium-containing phosphate material comprises at least one selected from the group consisting of $LiFePO_4$, $LiFeVPO_4$, $LiFeMnPO_4$, carbon-coated $LiFePO_4$, carbon-coated $LiFeVPO_4$, and carbon-coated $LiFeMnPO_4$.

9. The positive electrode slurry according to any one of claims 1 to 8, wherein the second positive electrode additive comprises at least one selected from the group consisting of: $Li_2MnO_3$, $Li_2MoO_3$, $Li_2RuO_3$, $Li_3VO_4$, $Li_2NiO_2$, $Li_6CoO_4$, $Li_5FeO_4$, $Li_2C_2$, $Li_3N$, $Li_2S$ and materials represented by the general formula $Li_{1+a}[Ni_xCo_yMn_zM_b]O_2$,
wherein $0.6<x<1$, $0\leq y<0.3$, $0\leq z<0.3$, $0<a<0.2$, $0<b<0.2$, $x+y+z+b=1$, M is one or more selected from the group consisting of Mg, Ca, Sb, Ce, Ti, Zr, Sr, Al, Zn, Mo, and B, and optionally, $0.\ 8<x<1$.

10. The positive electrode slurry according to any one of claims 1 to 9, wherein the second positive electrode additive comprises at least one selected from the group consisting of: $LiNi_{0.96}Co_{0.02}Mn_{0.02}O_2$, $Li_5FeO_4$ and $Li_2NiO_2$.

11. A secondary battery comprising a positive electrode sheet including a positive electrode active material layer obtained by coating and drying the positive electrode slurry of any one of claims 1 to 10.

12. A battery module, comprising the secondary battery according to claim 11.

13. A battery pack, comprising the battery module according to claim 12.

14. An electrical apparatus, comprising at least one of the secondary batteries according to claim 11, the battery module according to claim 12 or the battery pack according to claim 13.

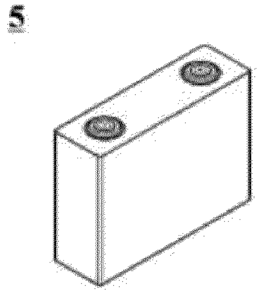


FIG. 1

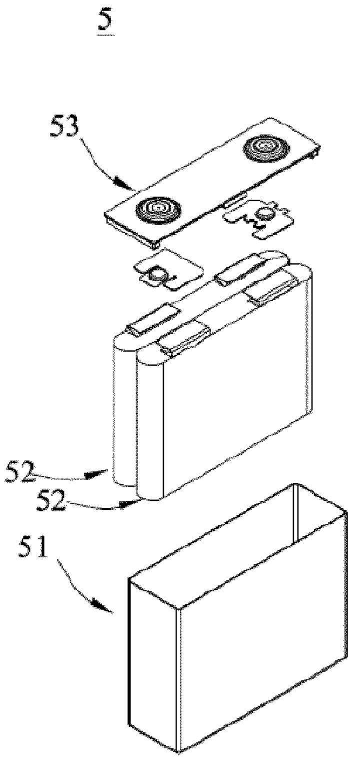


FIG. 2

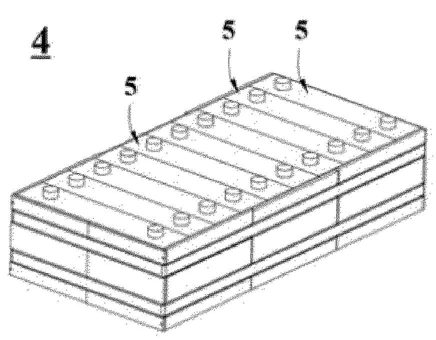


FIG. 3

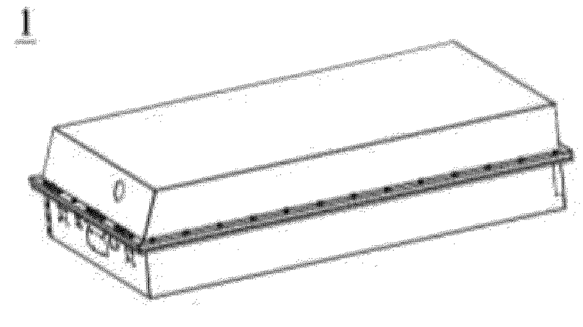


FIG. 4

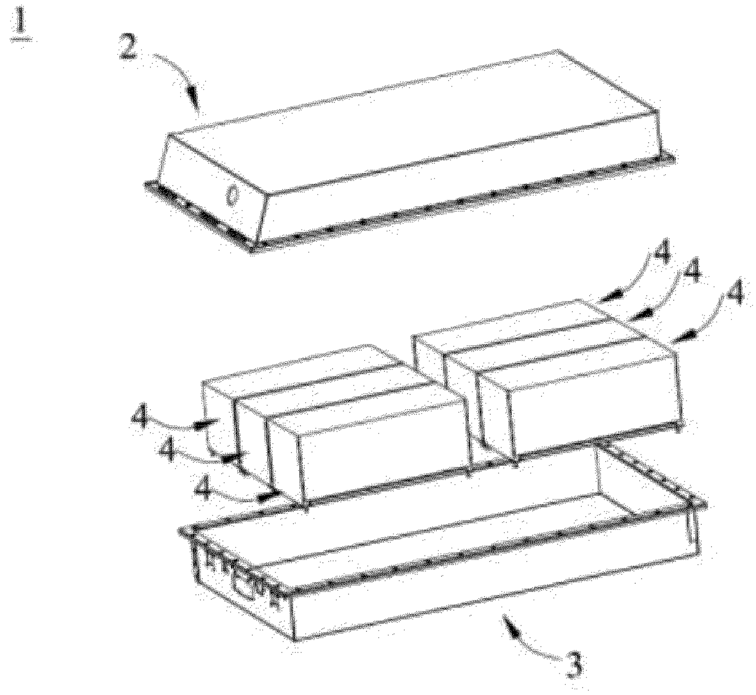


FIG. 5

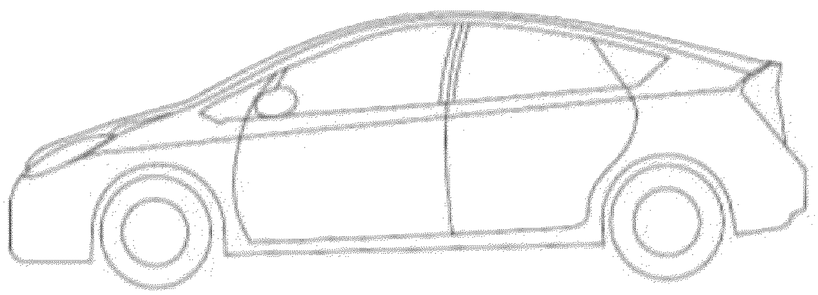

FIG. 6

## INTERNATIONAL SEARCH REPORT

International application No.
**PCT/CN2021/134335**

**A. CLASSIFICATION OF SUBJECT MATTER**

H01M 4/62(2006.01)i；H01M 10/0567(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 电池, 磺酸酐, 添加剂, 正极, 粘结剂, 粘合剂, 聚合物, 烷基, 烯基, 浆料, 活性, 高温, 产气, cell?, batter+, sulfonic W anhydride, additive?, positive, binder, polymer, alkyl, alkenyl, slurry, active, high W temperature, gas

**C. DOCUMENTS CONSIDERED TO BE RELEVANT**

| Category* | Citation of document, with indication, where appropriate, of the relevant passages | Relevant to claim No. |
|---|---|---|
| Y | CN 107492660 A (NINGDE AMPEREX TECHNOLOGY LTD.) 19 December 2017 (2017-12-19)<br>description, paragraphs 0014-0063 | 1-14 |
| Y | CN 112216864 A (NINGDE CONTEMPORARY AMPEREX TECHNOLOGY CO., LTD.) 12 January 2021 (2021-01-12)<br>description, paragraphs 0032-0075 | 1-14 |
| Y | CN 1877897 A (HITACHI MAXELL LTD.) 13 December 2006 (2006-12-13)<br>description, pages 3-8 | 1-14 |
| Y | CN 112259791 A (HUIZHOU EVE ENERGY CO., LTD.) 22 January 2021 (2021-01-22)<br>description, paragraphs 0010-0043 | 1-14 |
| Y | CN 103262326 A (HITACHI MAXELL LTD.) 21 August 2013 (2013-08-21)<br>description, paragraphs 0110-0128 | 1-14 |
| Y | CN 112005418 A (NINGDE AMPEREX TECHNOLOGY LTD.) 27 November 2020 (2020-11-27)<br>description, paragraphs 0004-0030 | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 August 2022** | **26 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/134335**

| Patent document cited in search report | | | Publication date (day/month/year) | Patent family member(s) | | | Publication date (day/month/year) |
|---|---|---|---|---|---|---|---|
| CN | 107492660 | A | 19 December 2017 | CN | 107492660 | B | 24 April 2020 |
| CN | 112216864 | A | 12 January 2021 | WO | 2021004461 | A1 | 14 January 2021 |
| | | | | EP | 3799185 | A1 | 31 March 2021 |
| | | | | US | 2021119260 | A1 | 22 April 2021 |
| | | | | EP | 3799185 | A4 | 22 September 2021 |
| | | | | US | 11196086 | B2 | 07 December 2021 |
| | | | | EP | 3799185 | B1 | 04 May 2022 |
| CN | 1877897 | A | 13 December 2006 | JP | 2006344390 | A | 21 December 2006 |
| | | | | KR | 20060127756 | A | 13 December 2006 |
| | | | | JP | 2006344391 | A | 21 December 2006 |
| | | | | US | 2006286459 | A1 | 21 December 2006 |
| | | | | CN | 1877897 | B | 25 August 2010 |
| | | | | US | 7829226 | B2 | 09 November 2010 |
| | | | | JP | 2011086632 | A | 28 April 2011 |
| | | | | JP | 5072056 | B2 | 14 November 2012 |
| | | | | JP | 5095090 | B2 | 12 December 2012 |
| | | | | JP | 2013101968 | A | 23 May 2013 |
| | | | | JP | 5279045 | B2 | 04 September 2013 |
| | | | | KR | 101347671 | B1 | 03 January 2014 |
| | | | | JP | 5474224 | B2 | 16 April 2014 |
| CN | 112259791 | A | 22 January 2021 | | None | | |
| CN | 103262326 | A | 21 August 2013 | KR | 20130143083 | A | 30 December 2013 |
| | | | | US | 2013230770 | A1 | 05 September 2013 |
| | | | | WO | 2012067102 | A1 | 24 May 2012 |
| | | | | JP | WO2012067102 | A1 | 12 May 2014 |
| CN | 112005418 | A | 27 November 2020 | WO | 2021128206 | A1 | 01 July 2021 |
| | | | | US | 2021408595 | A1 | 30 December 2021 |

Form PCT/ISA/210 (patent family annex) (January 2015)